# EUROPÄISCHE PATENTSCHRIFT

(11) **EP 1 488 840 B1**
(45) Veröffentlichungstag und Bekanntmachung des Hinweises auf die Patenterteilung: **17.08.2011**
(21) Anmeldenummer: 04013349.8
(22) Anmeldetag: 07.06.2004
(51) Int. Cl.: B01D 39/16

(54) **Verfahren zur Herstellung eines Verbundfiltermaterials**
Method for making a composite filter material
Procédé pour fabriquer un matériel de filtre composite

(30) Priorität: 18.06.2003 DE 10327373
(43) Veröffentlichungstag der Anmeldung: 22.12.2004
(73) Patentinhaber: Infiltec GmbH, 67346 Speyer (DE)
(72) Erfinder: Dobrick, Michele, 67346 Speyer (DE); Stock, Michael, 67346 Speyer (DE)
(74) Vertreter: Wagner, Jutta

(56) Entgegenhaltungen:
- EP-A- 0 653 235
- FR-A- 2 462 188
- GB-A- 2 320 449
- STRAUSS S: "FILTERN MIT GESINTERTEM ULTRAHOCHMOLEKULAREM POLYETHYLEN" KUNSTSTOFFE, CARL HANSER VERLAG. MUNCHEN, DE, Bd. 82, Nr. 4, 1. April 1992 (1992-04-01), Seiten 338-340,341, XP000265425 ISSN: 0023-5563

## Beschreibung

Die vorliegende Erfindung betrifft ein Verfahren zur Herstellung eines neuartigen Aufbaus für einen Filter.

Bekannte mehrschichtige Filter werden aus Lagen gebildet, die einander zwar berühren, bei denen aber die unterschiedlichen Materialien nicht miteinander vollflächig verbunden sind, da hierzu verwendbare Substanzen wie etwa Klebstoffe die Poren blockieren würden.

Solche Verbundfilter haben daher den Nachteil, dass sich insbesondere bei der Flüssigfiltration zwischen den Schichten Kanäle ausbilden können, die keine homogenen Fliessverhältnisse gewährleisten und somit das Produkt beeinträchtigen.

Verwendet man Verbundfilter, bei denen eine Schicht aus den an sich bevorzugten Fasermaterialien bestehen - darunter befinden sich solche mit erhöhtem Zeta-Potential - so können sich Fasern ablösen und mit ausgeschleust werden, so dass kein fremdkörperfreies Produkt entsteht.

Aus der EP 0 634 952 B1 ist ein Filter bekannt, bei welchem das Filterelement aus ultrahochmolekularem feinkörnigem Polyethylen und einem weiteren Polyethylenbestandteil aufgebaut ist. An seiner Zuströmoberfläche ist eine feinporöse Beschichtung aus einem feinkörnigem Material vorgesehen. Mit einem Fasermaterial ist dieses Formelement nicht verbunden.

Die DE OS 30 24 324 beschreibt einen Filterkörper aus zwei koaxial ineinander gesteckten hautähnlichen Filterschichten. Auch hier liegt zwar Mehrschichtenaufbau vor, Fasermaterialien werden ebenfalls nicht verwendet.

Ferner wird in der GB 2 320 449 A ein Verbundmaterial zur Schaffung von Filtern, insbesondere zur Filterung von Gasen und Flüssigkeiten offenbart. Es wird aus einer ersten Schicht aus PTFE-Fasermaterial, das aufgespannt ist oder gehalten wird, und aus einer zweiten Schicht aus gesintertem, porösem PTFE geschaffen. Das gesinterte, poröse PTFE wird aus granulären PTFE-Partikeln gebildet, die vor-aufgeschmolzen und in fließfähigem Zustand auf das Fasermaterial aufgegeben werden. Wieder wird dort das Aufsprühen des aufgeschmolzenen PTFE auf flach aufgespanntes Fasermaterial beschrieben.

Die vorliegende Erfindung hat sich daher die Aufgabe gestellt, einen aus zwei oder mehr Schichten bestehenden Filter zu schaffen, dessen eine Schicht aus einem Fasermatieral besteht, dessen Grenzflächen zwar mechanisch fest miteinander verbunden sind, bei welchen aber eine Kanalbildung zwischen den Schichten ausgeschlossen und die Mitnahme von Fasern aus faserhaltigen Filterschichten weitestgehend unterbunden ist.

Die Lösung dieser Aufgabe gelingt mit einem Herstellungsverfahren für einen Filter mit den Merkmalen des Anspruchs 1, wobei der Filter aus mindestens einer ersten Schicht aus Fasermaterial, der eine Raumform gegeben wird, sowie mindestens aus einer zweiten Schicht, die aus Kunststoff besteht. Dabei wird die zweite Schicht aus einem an die erste Schicht angesinterten Granulat gebildet.

Dabei kann das erste Material grundsätzlich ein beliebiges Fasermaterial mit mineralischem, metallischem oder faserigem Aufbau sein, wesentlich ist lediglich, dass die angeschmolzenen Granulatteilchen (punktförmig) mit dem Substrat verkleben. Auf diese Weise entsteht ein homogener Aufbau, welcher Bypässe zwischen den jeweiligen Schichten vermeidet, was zu einer höheren Filtereffektivität führt.

Da die angeschmolzenen Granulatteilchen sich mit den an der Oberfläche befindlichen Faseranteilen verbinden, führt dies zu einem weitestgehenden Unterbinden von Ausschwemmungen von Faserteilchen. Hierbei wird z. B. die Faserfilterseite angeströmt. Es ist natürlich auch möglich, die erste Filterschicht beidseitig anzusintern. Die Form des Filters ist dabei nahezu beliebig, sie kann plattenförmig sein oder einen Hohlraum umschließen, der mindestens einseitig offen ist, so dass das Granulat angeschüttet werden kann, wobei dieses der ersten Filtermaterialschicht gegenüberliegend von einer Form abgestützt wird, die nach dem Erkalten wieder entfernt werden kann oder aber, wenn sie selbst Filtermaterial ist, auf diese Weise zu einem Dreischichtverbund vereint wird.

Von einem weiteren, ganz besonderen Vorteil ist, dass erfindungsgemäß Granulate mit relativ hoher mechanischer Festigkeit verwendet werden können, so dass dieses auch beim Granulieren zur Anforderung von Konstruktionselementen, wie z. B. Gewinden oder Flanschen und damit materialeinheitlich verwendet werden kann.

Als verwendbares Kunststoffgranulat kommt insbesondere Polyethylen (PE), besonders bevorzugt ultrahochmolekulares PE, in Frage, aber auch grundsätzlich andere sinterbare Kunststoffe. Dieses weist vorteilhaft Teilchengrößen zwischen etwa 1-400 µm auf. Entsprechend können auch die Porengrößen in weiten Grenzen gewählt werden.

Desweiteren kann Hochdruckpolypropylen eingesetzt werden, aber auch z.B. Polytetrafluorethylen (PTFE), welches aber vor dem Sintervorgang zu einem Formkörper vorzupressen ist.

Beim Sintervorgang unterliegt der Kunststoffgranulatkörper einem Schwund. Sintert man daher das Granulat z.B. an einen zylindrischen Körper, so schrumpft dieser zum Sintervorgang zusätzlich auf. Beim Ansintern an einen Außen die Faserlage umgehenden Zylinder kann das Fasermaterialteil von innen über einen z.B. expandierbaren Zylinder abgestützt werden.

Beim umgekehrten Vorgang befindet sich das Granulat innen und das Fasermaterial außen. Hierbei kann z.B. ebenfalls ein expandierbarer Zylinder das Granulat mit dem nötigen Anpreßdruck beaufschlagen. Dieser kann als temperturfester Gummischlauch oder aus Metallsegmenten bestehend ausgelegt sein, die mechanisch auseinandergetrieben werden. Die Schichtdicken des Sintermaterials können ab etwa 1 bis z.B. 6 mm betragen.

Die Porengröße der aus dem Granulat erhaltenen zweiten Filterschicht ist abhängig vom beim Sintern angewendeten Druck, der grundsätzlich auch Atmosphärendruck sein kann. Mit dem angewendeten Druck lässt sich somit auch eine gewünschte Porengröße einstellen.

Zu hohe Drücke führen zu einem großflächigen Verschmelzen der Granulatteilchen und damit Porenverschluss; der Druck sollte daher etwa 15 kp/cm² nicht übersteigen.

Der weitere zur Verfügung stehende Parameter ist die Temperatur, die nahe am Schmelzpunkt liegen sollte. Sie liegt vorteilhaft bei etwa 120-300° C, wobei die Einwirkungszeit je nach Schichtdicke bzw. Volumen und Kunststoff bei etwa 5-120 Min. liegen sollte.

Das erfindungsgemäße Verfahren besteht somit darin, dass man an die erste Filterschicht (stehend oder liegend) eine Granulatschicht anschüttet, wobei diese bei stehender Anordnung gegenüberliegend durch eine Form mit frei wählbarer Kontur und/oder ebenfalls aus Filtermaterial bestehend abgestützt und auf Sintertemperatur erwärmt wird, wobei man die Beschaffenheit der entstehenden Kunststoff-Filterschicht durch den Einfluss von Druck, Wärme und Zeit steuert.

Neben den oben erwähnten Vorteilen, wie insbesondere die Vermeidung von Faserabtrag in die Reinseite des Filters und der Möglichkeit der Einstellung der Porengröße (z. B. zwischen 1 und 500 µm) sind die gute chemische Beständigkeit, die hohe Eigenstabilität und damit verbunden, der Fortfall von Stützkörpern zu erwähnen. Ebenso können wegen der Möglichkeit der stirnseitigen Abdichtung durch das gesinterte Material Endkappen vermieden werden, relativ kleine Baugrößen sind ebenso möglich, wie eine leichte Anpassung an den spezifischen Anwendungsfall von Schichtaufbau, Größe, Form und Filtercharakteristik.

Bei den erfindungsgemäß zum Einsatz kommenden Fasermaterialien werden solche mit hohem Zeta-Potential wegen ihrer besonderen Eigenschaften auch besonders bevorzugt, die wegen ihrer elektrochemischen Eigenschaften, z. B. Bakterien zu binden in der Lage sind. Ein solches Material sind z. B. Glasfasern.

Zu den beiliegenden Figuren sind Ausführungsbeispiele dargestellt. Dabei zeigen:
**Figur 1-3** runde Hohlfilter
**Figur 4-6** sternförmige
**Figur 7** ein Filter mit angesinterter Oberflächenprofilierung und
**Figur 8** ein solches mit einem angeformten Gewinde.

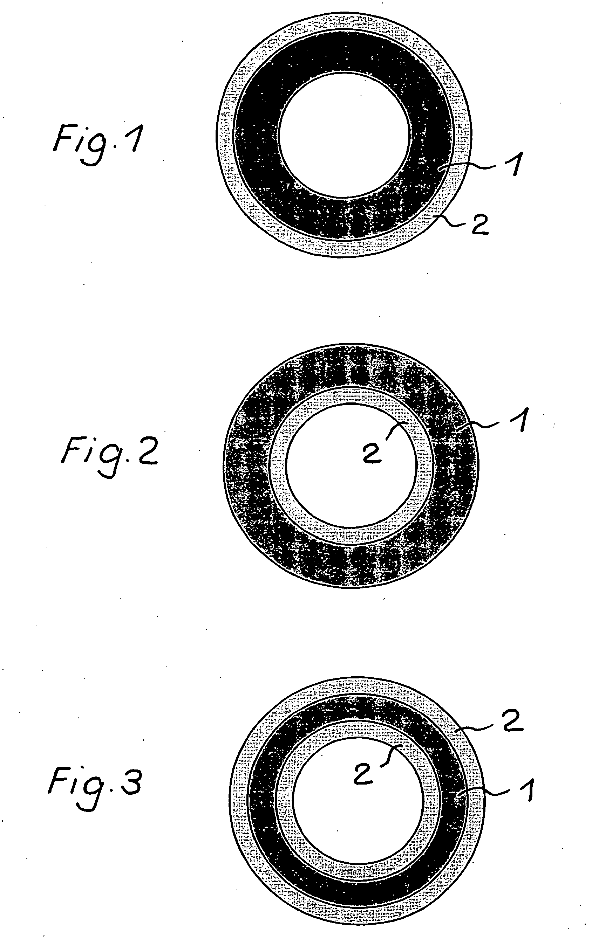

**In** **Figur 1** werden drei prinzipielle Möglichkeiten zur Herstellung von zylindrischen Filtern veranschaulicht.

Während es bei der Herstellung von Filterplatten genügt, die Vorlage z. B. eine Faserfilterplatte in eine Form zu legen, Granulat aufzuschütten und dieses gegebenenfalls mit Hilfe eines aufgelegten Stempels (unter Druck) zu sintern, wird bei der Herstellung von Rundformen wie vorliegend, ein Faserfilter in Zylinderform z. B. folgendermaßen hergestellt. Der aus Fasermaterial bestehende Zylinder 1 wird auf eine Unterlage gestellt und in Abstand dazu ein Hohlzylinder (nicht dargestellt) übergestülpt. Danach wird Granulat verfüllt und bei geeigneter Temperatur durch Erhitzen gesintert, wobei ein mit dem ersten Zylinder 1 fest verbundener zweiter Zylinder 2 aus Kunststoff, z. B. PE entsteht. Durch den festen Verbund entsteht ein hochstabiler zylindrischer Filter. Soll Druck ausgeübt werden, so kann dies durch einen inneren Stützzylinder geschehen, der das Fasermaterial gegen Verformung sichert sowie einen ringförmigen Stempel, der das Granulat niederdrückt. Ein Überstand kann einfach abgeschnitten werden.

In **Figur 2** wird analog so verfahren, dass in den Fasermaterialzylinder 1 ein Formkörper, hier ebenfalls zylindrisch eingestellt und das Granulat innen angeformt wird, wobei

**Figur 3** ein entsprechend ausgeführtes Produkt jedoch mit innerem und äußeren Granulatfilter 2 und einem dazwischen liegenden Fasermaterial Zylinder 1 zeigt.

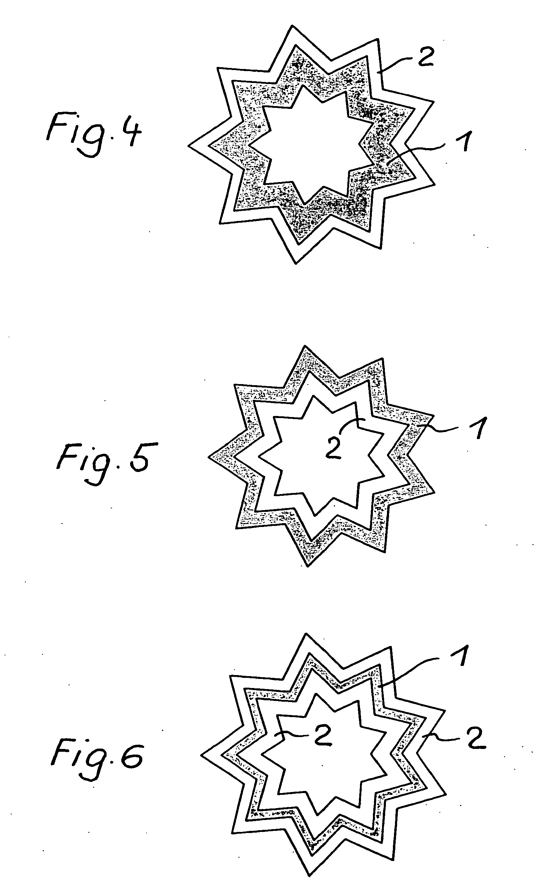

**Figur 4-6** verdeutlichen, dass auf diese Weise auch beliebige Raumformen erzeugt werden können, beispielsweise solche mit sternförmigem Querschnitt, die eine größere Oberfläche aufweisen.

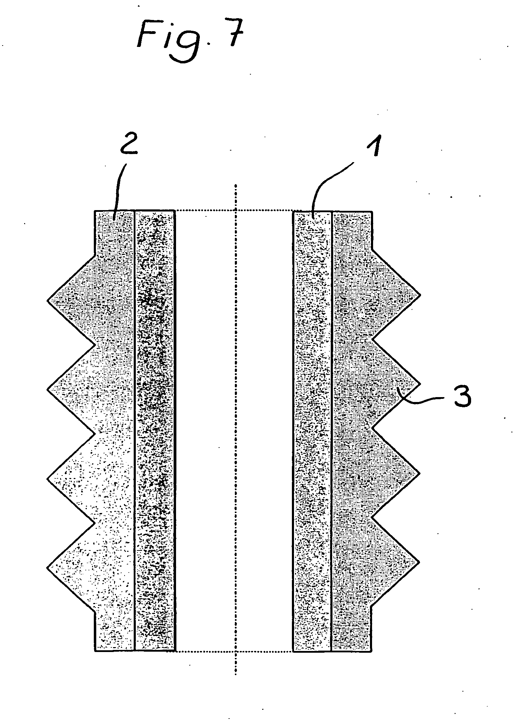

**Figur 7** zeigt schematisch eine andere Oberflächenvergrößerung, bei welcher an das Faserfilter ein Körper mit radialen Vertiefungen angeformt ist.

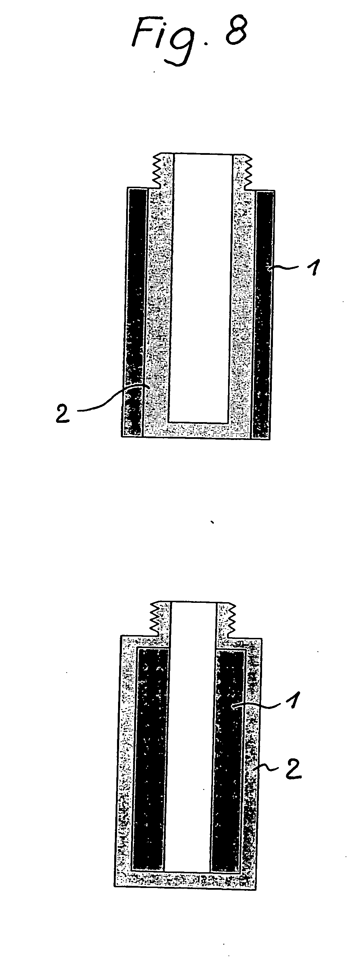

In **Figur 8** letztlich sind zwei Möglichkeiten gezeigt, das gesinterte Filterteil 2 beim Sintervorgang mit einem Konstruktionselement, hier ein Gewinde auszustatten. In der oberen Darstellung ist das Sinterteil vom Faserfilter 1 umfaßt, in der unteren liegt das Fasermaterial 2 innen.

## Patentansprüche

1. Verfahren zur Herstellung von aus zumindest zwei Schichten (1,2) bestehenden Filtern, die eine Raumform einnehmen,
**umfassend die Schritte:**
- Bereitstellen und Raumform Geben einer ersten Schicht (1) aus einem Fasermaterial,
- Anordnen einer Zwischenraum bildenden abstützenden Form um die erste Schicht (1), so dass zwischen der abstützenden Form und der ersten Schicht (1) ein Zwischenraum bereitgestellt wird,
- Anordnen einer zweiten Schicht (2) aus einem Kunststoffgranulat an der ersten Schicht (1),
- Erhitzen der zweiten Schicht (2) bis zu einem Schmelzpunkt des Kunststoffmaterials, wobei Ansintern der zweiten Schicht (2) an der ersten Schicht (1) erfolgt.

2. Verfahren nach Anspruch 1, **umfassend die Schritte:**
- stehend Anordnen der ersten Schicht (1), wobei die erste Schicht (1) eine Raumform mit einer Innen- und einer Außenseite annimmt,
- Anordnen einer innenseitigen Abstützform, anliegend an der Innenseite der ersten Schicht (1),
- Anordnen der Zwischenraum bildenden Abstützform um eine gewünschte Schichtdicke der zweiten Schicht (2) beabstandet um die Außenseite der ersten Schicht (1), dann
- Anordnen des die zweite Schicht (2) bildenden Kunststoffmaterials um die erste Schicht (1) und Durchführen des Ansinterns.

3. Verfahren nach Anspruch 1 oder 2, **umfassend die Schritte:**
- stehend Anordnen der ersten Schicht (1), wobei die erste Schicht (1) eine Raumform mit einer Innen- und einer Außenseite annimmt,
- Anordnen einer außenseitigen Abstützraumform, anliegend an der Außensseite der ersten Schicht (1),
- Anordnen der Zwischenraum bildenden Abstützform um eine gewünschte Schichtdicke der zweiten Schicht (2) beabstandet um die Innensseite der ersten Schicht (1),
- Anordnen des die zweite Schicht (2) bildenden Kunststoffmaterials um die erste Schicht (1) und Durchführen des Ansinterns.

4. Verfahren nach Anspruch 2 oder 3, **umfassend die Schritte:**
- Entfernen der den Zwischenraum bildenden Abstützform und/oder
- Entfernen der innenseitigen Abstützform oder der außenseitigen Abstützform.

5. Verfahren nach einem der Ansprüche 1 bis 4, **wobei** das Kunststoffgranulat eine Teilchengröße von 1 bis 400 µm aufweist.

6. Verfahren nach einem der Ansprüche 1 bis 5, **umfassend die Schritte:**
- Anordnen des die zweite Schicht (2) bildenden Kunststoffmaterials um die erste Schicht (1), indem das granuläre Kunststoffmaterial durch Formpressen vorgeformt wird.

7. Verfahren nach einem der Ansprüche 2 bis 6, **umfassend die Schritte:**
- Aufbringen eines Anpressdrucks auf die an die granuläre Kunststoffmaterialschicht (2) anliegende Abstützraumform, insbesondere eines Anpressdrucks von bis zu 15 kp/cm².

8. Verfahren nach einem der Ansprüche 1 bis 7, **wobei**
- das Fasermaterial ein Glasfasermaterial ist, und/oder wobei
- das Kunststoffmaterial ein Granulat aus ultrahochmolekularem Polyethylen ist.

9. Verfahren nach einem der Ansprüche 1 bis 8, wobei das Erhitzen auf eine Temperatur von etwa 120-300° C erfolgt.

10. Verfahren nach einem der Ansprüche 1 bis 9, wobei das Erhitzen über 5 bis 120 Minunten auf das Granulat einwirkt.

11. Verfahren nach einem der Ansprüche 1 bis 10, **wobei** die abstützende Form, die den Zwischenraum bildet, und/oder die innen- und/oder außenseitige Abstützraumform mit einem Trennmittel beschichtet ist.

## Claims

1. A method for producing filters, which consist of at least two layers (1, 2) and which assume a three-dimensional shape, **comprising the steps:**
- providing of and giving a three-dimensional shape to a first layer (1) of a fiber material,
- arranging a gap-forming supporting shape around the first layer (1), so that a gap is provided between the supporting shape and the first layer (1),
- arranging a second layer (2) of a plastic granulate on the first layer (1),
- heating the second layer (2) to a melting point of the plastic material, wherein the second layer (2) is sintered to the first layer (1).

2. The method according to claim 1, **comprising the steps:**
- vertically arranging the first layer (1), wherein the first layer (1) assumes a three-dimensional shape comprising an inner and an outer side,
- arranging a support shape on the inner side, so as to rest against the inner side of the first layer (1),
- arranging the gap-forming support shape around the outer side of the first layer (1), so as to be spaced apart by a desired layer thickness of the second layer (2), then
- arranging the plastic material, which forms the second layer (2), around the first layer (1) and carrying out the sintering.

3. The method according to claim 1 or 2, **comprising the steps:**
- vertically arranging the first layer (1), wherein the first layer (1) assumes a three-dimensional shape comprising an inner and an outer side,
- arranging a three-dimensional support shape on the outer side, so as to rest against the outer side of the first layer (1),
- arranging the gap-forming support shape around the inner side of the first layer (1), so as to be spaced apart by a desired layer thickness of the second layer (2),
- arranging the plastic material, which forms the second layer (2), around the first layer (1) and carrying out the sintering.

4. The method according to claim 2 or 3, **comprising the steps:**
- removing the gap-forming support shape and/or
- removing the support shape on the inner side or the support shape on the outer side.

5. The method according to any one of claims 1 to 4, **wherein** the plastic granulate encompasses a particle size of from 1 to 400 µm.

6. The method according to one of claims 1 to 5, **comprising the steps:**
- arranging the plastic material, which forms the second layer (2), around the first layer (1), in that the granular plastic material is pre-formed by means of compression molding.

7. The method according to any one of claims 2 to 6, **comprising the steps:**
- applying a contact pressure to the three-dimensional support shape, which rests against the granular plastic material layer (2), in particular a contact pressure of up to 15 kp/cm².

8. The method according to any one of claims 1 to 7, **wherein**
- the fiber material is a fiber glass material and/or wherein
- the plastic material is a granulate of ultra-high molecular weight polyethylene.

9. The method according to any one of claims 1 to 8, **wherein** the heating takes place up to a temperature of approximately 120-300°C.

10. The method according to any one of claims 1 to 9, **wherein** the heating acts on the granulate for 5 to 120 minutes.

11. The method according to any one of claims 1 to 10, **wherein**
the supporting shape, which forms the gap, and/or the three-dimensional support shape on the inner side and/or on the outer side, is coated with a form release agent.

## Revendications

1. Procédé pour fabriquer des filtres constitués d'au moins deux couches (1, 2), qui occupent une forme spatiale,
comprenant les étapes suivantes :
- mise à disposition et attribution de forme spatiale d'une première couche (1) à base d'un matériau fibreux,
- mise en place d'une forme soutenant et formant un espace intermédiaire autour de la première couche (1), de sorte qu'un espace intermédiaire est mis à disposition entre la forme de soutien et la première couche (1),
- mise en place d'une seconde couche (2) à base d'un granulé de plastique sur la première couche (1),
- réchauffement de la seconde couche (2) jusqu'à un point de fusion du matériau plastique, un frittage de la seconde couche (2) s'effectuant sur la première couche (1).

2. Procédé selon la revendication 1, comprenant les étapes suivantes :
- mise en place verticale de la première couche (1), la première couche (1) prenant une forme spatiale avec un côté intérieur et un côté extérieur,
- mise en place d'une forme de soutien côté intérieur, adjacente au côté intérieur de la première couche (1),
- mise en place de la forme de soutien formant l'espace intermédiaire à une distance du côté extérieur de la première couche (1), égale à une épaisseur de couche souhaitée de la seconde couche (2), puis
- mise en place du matériau plastique formant la seconde couche (2) autour de la première couche (1) et mise en oeuvre du frittage.

3. Procédé selon la revendication 1 ou 2, comprenant les étapes suivantes :
- mise en place verticale de la première couche (1), la première couche (1) prenant une forme spatiale avec un côté intérieur et un côté extérieur,
- mise en place d'une forme spatiale de soutien côté extérieur, adjacente au côté extérieur de la première couche (1),
- mise en place de la forme de soutien formant l'espace intermédiaire à une distance du côté intérieur de la première couche (1), égale à une épaisseur de couche souhaitée de la seconde couche (2),
- mise en place du matériau plastique formant la seconde couche (2) autour de la première couche (1) et mise en oeuvre du frittage.

4. Procédé selon la revendication 2 ou 3, comprenant les étapes suivantes :
- enlèvement de la forme de soutien formant l'espace intermédiaire et/ou
- enlèvement de la forme de soutien côté intérieur ou de la forme de soutien côté extérieur.

5. Procédé selon l'une quelconque des revendications 1 à 4,
le granulé de plastique présentant une grandeur de particule de 1 à 400 µm.

6. Procédé selon l'une quelconque des revendications 1 à 5, comprenant les étapes suivantes :
- mise en place du matériau plastique formant la seconde couche (2) autour de la première couche (1) du fait que le matériau plastique granulaire est préformé par moulage par compression.

7. Procédé selon l'une quelconque des revendications 2 à 6, comprenant les étapes suivantes :
- application d'une pression d'appui sur la forme spatiale de soutien adjacente à la couche de matériau plastique granulaire (2), en particulier d'une pression d'appui allant jusqu'à 15 kp/cm².

8. Procédé selon l'une quelconque des revendications 1 à 7,
- le matériau fibreux étant un matériau à fibre de verre, et/ou
- le matériau plastique étant un granulé à base de polyéthylène de masse moléculaire très élevée.

9. Procédé selon l'une quelconque des revendications 1 à 8, le réchauffement s'effectuant à une température d'environ 120-300°C.

10. Procédé selon l'une quelconque des revendications 1 à 9, le réchauffement agissant sur le granulé pour une durée de 5 à 120 minutes.

11. Procédé selon l'une quelconque des revendications 1 à 10,
la forme de soutien, qui forme l'espace intermédiaire, et/ou la forme spatiale de soutien côté intérieur et/ou côté extérieur, étant revêtue(s) d'un agent de séparation.
